# EUROPEAN PATENT APPLICATION

(11) **EP 0 911 556 A1**
(43) Date of publication of application: **28.04.1999**
(21) Application number: 98119641.3
(22) Date of filing: 16.10.1998
(51) Int. Cl.: F16K 1/54, F16K 1/38

(54) **Metering valve**

(30) Priority: 23.10.1997 US 956612
(71) Applicant: HOKE INCORPORATED, Cresskill, New Jersey 07626 (US)
(72) Inventor: Radossi, Sergio, Cresskill, New Jersey 07626 (US); Neill, John H., Edgewater, New Jersey 07020 (US)
(74) Representative: VOSSIUS & PARTNER

(57) **Abstract**

A metering valve having an inlet (3), an outlet (4) and a stem-receiving chamber (21) in communication with the inlet. A valve seat (22) extending from and in communication with the stem-receiving chamber. A needle receiving chamber (23) interposed between and in communication with the valve seat and the inlet. A valve stem (38) movably mounted within the stem-receiving chamber (21) and a needle extending from the valve stem and extending within the needle receiving chamber. A tip (41) having a lower end is interposed between the stem and the needle. The valve seat has a lower edge which is the mouth of the needle-receiving chamber. The lower end of the tip is moved into contact with the mouth to prevent the flow of fluid and is moved away from the mouth to permit the flow of fluid from the inlet to the outlet. The angle of the valve seat and the angle of the tip are different so that there is a space between the valve seat and the tip when the tip is in contact with the mouth. A lock plug (50) is provided to hold the stem in a predetermined position. The lock plug sits in an opening (51) communicating with the stem-receiving chamber and is adapted to be moved in one direction into contact with the stem to lock the stem in position and to be moved in the opposite direction to unlock the stem for movement.

## Description

### Background

The present invention relates to metering valves and more particularly to metering valves for controlling the amount of fluid which flows from an inlet to an outlet.

Metering valves have been used for a number of years in order to control the amount of fluid that flows from an inlet to an outlet. Such metering valves comprise a metering needle which moves relative to a valve seat to control the flow. In the past it has been difficult to keep the needle in the proper position in order to precisely control the flow of fluid from an inlet into an outlet. Many existing metering valves do not meter the fluid as accurately as desired. Existing mechanisms for holding the needle at the proper position to maintain a desired fluid flow and to accurately control the fluid flow are complicated, expensive to make and maintain and are difficult to operate.

### Objects

The present invention overcomes these drawbacks and has for one of its objects the provision of an improved metering valve in which means are provided to precisely control the amount of fluid moving between the inlet and the outlet.

Another object of the present invention is the provision of an improved metering valve which permits greater accuracy in controlling the amount of fluid being metered.

Another object of the present invention is the provision of an improved metering valve which can be locked in any desired position without the use of complicated locking means.

Another object of the present invention is the provision of an improved metering valve having improved means for holding the needle of the metering valve in the proper position.

Another object of the present invention is the provision of an improved metering valve which is inexpensive to manufacture and simple to use.

Other and further objects will be obvious upon the understanding of the illustrative embodiment about to be described, or which will be indicated in the appended claims, and various advantages not referred to herein, will occur to one skilled in the art upon employment of the invention in practice.

### Drawings

A preferred embodiment of the invention has been chosen for purposes of illustration and description and is shown in the accompanying drawings forming a part of the specification wherein:
Figure 1 is an exploded sectional side view of a metering valve made in accordance with the present invention.
Figure 2 is a sectional view side view showing the metering valve in an open position.
Figure 3 is a sectional side view showing the metering valve in its closed position.
Figure 4 is an enlarged fragmentary cross sectional view showing the valve in its closed position.
Figure 5 is a view similar to Fig. 4 showing the valve in a partly open position.
Figure 6 is a view similar to Fig. 4 showing the valve in a fully open position.
Figure 7 is a fragmentary sectional view of the metering valve showing the position of the needle locking means in an unlocked position.
Figure 8 is a sectional view taken along line 8-8 of Fig. 7.
Figure 9 is a fragmentary sectional view of the metering valve showing the position needle locking means in a locked position.
Figure 10 is a sectional view taken along line 10-10 of Fig. 9.
Figure 11 is an elevational view, partly in section, showing another embodiment of the present invention.

### Description

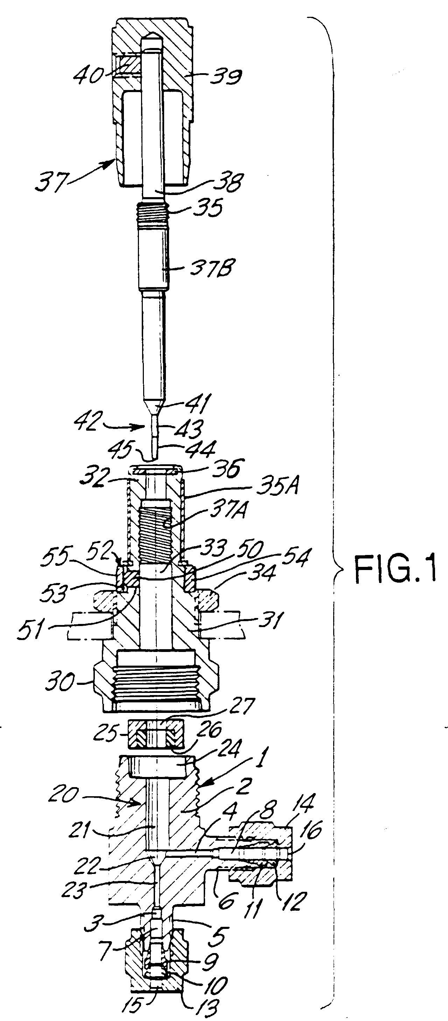

Referring to the drawings and more particularly to Fig. 1, the metering valve 1 of the present invention comprises a body portion 2 having an inlet conduit 3 and an outlet conduit 4. It will be understood that the identification of the conduits 3 and 4 as inlet and outlet conduits, respectively, is for ease in description only. The conduits 3 and 4 may be outlet and inlet conduits, respectively, without departing from the invention. The inlet and outlet conduits 3 and 4 are shown at right angles to each other and have inlet and outlet necks 5 and 6, respectively. However, it is within the scope of this invention that the inlet and outlet conduits 3 and 4 be at different angles to each other. Each neck 5 and 6 has a bore 7 and 8, respectively, within which are positioned ferrules 9-10 and 11-12, respectively, and over which is threaded a nut 13-14 (each having an opening 15-16, respectively) which applies pressure to ferrules 9-10 and 11-12. When tubing (not shown) is mounted within the openings 15-16 and into bores 7-8, tightening the nuts 13-14 will press the ferrules 9-10 and 11-12 around and into the tubing to hold it in place and to form a seal.

The body portion 2 has an upstanding valve-seating assembly 20 comprising a cylindrical stem-receiving chamber 21, a conical valve seat 22 therebelow, and a preferably cylindrical needle receiving chamber 23, all of which are axially aligned and in communication with each other. The conical valve seat 22 has a lower edge 22A which comprises the mouth of the needle receiving chamber 23. The outlet conduit 4 is in communication with the valve seat 22 and is shown at right angles to the stem-receiving chamber 21. The inlet conduit 3 communicates with cylindrical needle-receiving chamber 23 and is shown in axial alignment therewith. The stem-receiving chamber 21 has an expanded seal seat 24 at its upper end which is adapted to receive a sealing cage 25 having an o-ring 26 and an opening 27 therein.

Threadably mounted on the upper part of the valve assembly 20 is a bonnet assembly 30 which comprises a main body portion 31 and an upwardly extending bonnet portion 32. The main body portion 31 and the bonnet portion 32 are provided with a central stem-receiving bore 33 which communicates with stem-receiving chamber 21 and is in axial alignment therewith. A fastening mechanism 34, such as a nut, is provided in order to hold the valve 1 on a panel or similar structure which is shown in broken lines. The bonnet portion 32 has an outer sleeve 35A and a wiper 36 at the top.

A handle assembly 37 has a hollow-handle 39 and an elongated stem 38 which is mounted within and extends downwardly from handle 39 and is attached thereto by set screw 40. The stem-receiving chamber 33 has internal threads 37A in its upper portion. The stem 38 has an enlargement 37B having its upper end 35 threaded which meshes with threads 37A in chamber 33. Because of the threaded relationship between internal threads 37A and threaded 35 stem enlargement 37B, rotation of the handle 39 will result in the raising or lowering of the stem 38 relative to the bonnet assembly 30 and valve body 2 as well as its related conduits and chambers 33, 21, 23 and 7. The lower tip 41 of the stem 38 has a conical configuration with a needle assembly 42 extending downwardly therefrom. The needle assembly 42 has a cylindrical upper portion 43, a tapered or conical lower portion 44 and a curved end 45. The needle assembly 42 is adapted to be inserted into the needle-receiving chamber 23 and to move relative thereto. The bonnet 32 has a marker 70 on it and the handle 39 has graduated numbers 71 around its periphery (Fig. 11). When the handle 39 is rotated by aligning the graduated numbers 71 with the marker 70, the user will know the exact position of the needle assembly 42 within the needle receiving chamber 23. This will tell the user what type of flow there is in the valve between the inlet and the outlet. By rotating the handle 39 relative to the bonnet 32, the needle assembly 42 will be raised or lowered relative to the needle-receiving chamber 23 so that the flow of fluid through the valve can be very accurately and easily regulated.

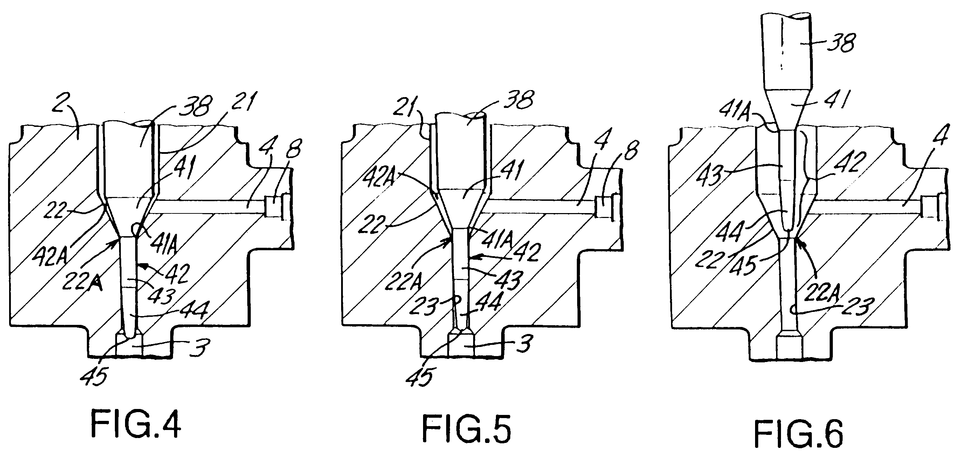

The wall of the conical valve seat 22 is preferably at an angle which is greater than the angle of the surface of the conical lower tip 41 of the stem 38. As shown in Fig. 4 when the stem 38 is at it lowermost position, the lower end 41A of its conical lower tip 41 will strike the lower edge or mouth 22A of the conical valve seat 22 and fit substantially snugly therewith to form a seal with the mouth 22A so that no fluid will flow through the mouth 22A. While Fig. 4 shows the lower end 41A of tip 41 being substantially the same diameter as the lower edge or mouth 22A of chamber 23, so that the lower end 41A fits substantially snugly in mouth 22A to seal it, it will be understood that because of tolerances and the fact that the angle of the conical lower tip 41 of stem 38 is less than the angle of conical valve seat 22, a portion of the conical lower portion of conical tip 41 may enter the mouth 22A so that seal may be made above the lower end 41A and along the lower portion of the conical tip 41.

There will remain a space 42A between the conical wall of the valve seat 22 and the conical surface of the lower tip 41 of the stem 38 because of the different angles of each. As soon as the handle 39 is rotated to raise the stem 38, the lower end 41A the conical stem lower tip 41 is lifted off the mouth 22A of the conical valve seat 22 (Fig. 5) thereby permitting partial flow of fluid from conduit 3 to conduit 4 through chamber 23, mouth 22A and space 42A. Further rotation of the handle 39 relative to bonnet 32 will lift the needle 42 out of chamber 23 (Fig. 6) permitting full flow of the fluid. By adjusting handle 39 relative to bonnet 32, the position of the conical lower tip 41 may be adjusted relative to the conical valve seat 22 from any position between the closed position of Fig. 4 to the fully open position of Fig. 6 to permit the fluid flow to be easily and accurately regulated.

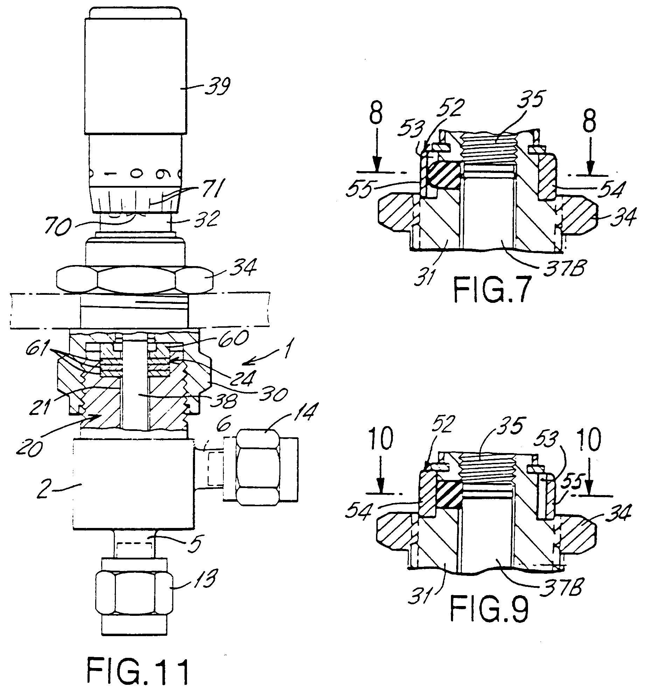

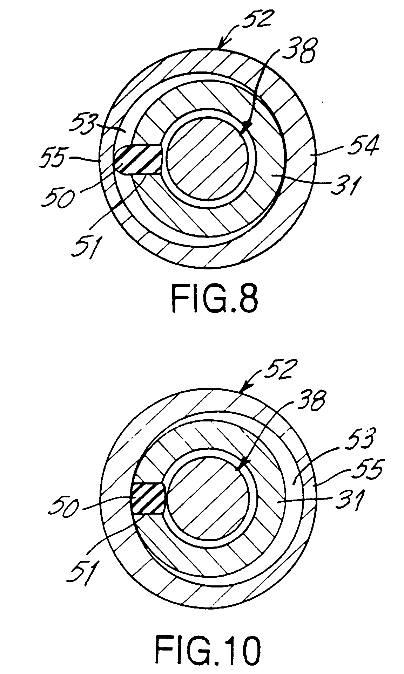

Means are provided to lock the stem 38 in a predetermined position so as to prevent movement thereof by inadvertent rotation of the handle 39. The lower portion of the bonnet assembly 30 is provided with a lock plug 50 in an opening 51 therein (Figs. 7 to 10) which communicates with stem receiving chamber 33 and is opposite enlarged portion 37B of stem 38.. A lock-ring 52 is provided around the bonnet assembly 30 at the same level as the lock plug 50. The lock-ring 52 has one portion 54 thicker than and preferably opposite to the other thinner portion 55 to form an inner cam surface 53. When the thinner portion 55 of the lock-ring 52 is adjacent the lock plug 50 (Figs. 7-8) the lock plug 50 remains at rest and does not exert any pressure on the valve stem 38 so that the valve stem 38 is free to move up and down when handle 39 is rotated. Once a desired position of the needle assembly 42 relative to the needle receiving chamber 23 has been reached, the lock-ring 52 is rotated until the thick portion 55 of the lock-ring 52 is opposite the plug 50 (Figs. 9-10). The cam surface 53 of the thick portion 55 will compress the lock plug 50 inwardly so that the lock plug 50 applies pressure to the valve stem 38 thereby locking the valve stem 38 (and the needle assembly 42) in that position. When it is desired to release the valve stem 38 for vertical movement, the lock-ring 52 is again rotated until the thin portion 55 of the lock-ring 52 is adjacent the lock plug 50 which permits the lock plug 50 to expand and to release its pressure on the valve stem 38 thereby permitting the valve stem 38 to move up or down.

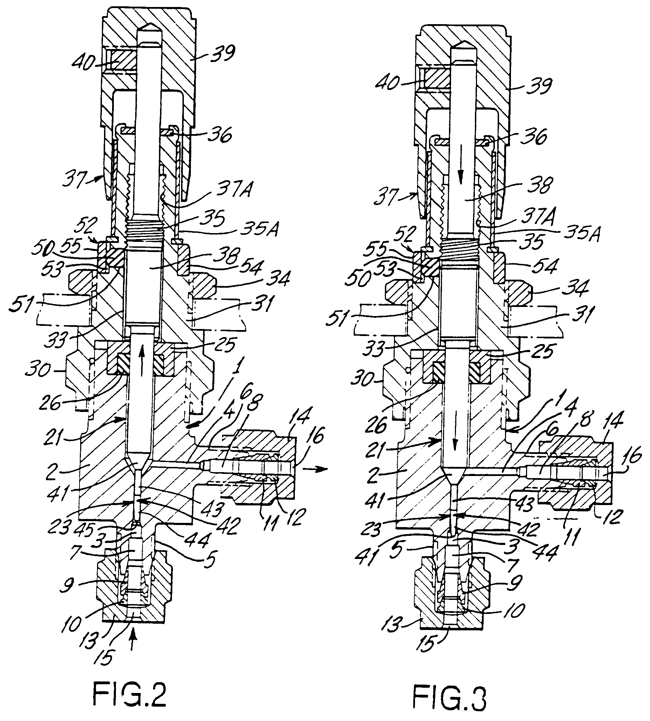

The embodiment shown in Fig. 11 is similar to the embodiment shown in Figs. 1-10 except that the seal seat 24 is provided with a spacer 60 and a plurality of sealing wafers 61.

It will thus be seen that the present invention provides an improved metering valve in which means are provided to precisely control the amount of fluid moving between the inlet and the outlet, which permits greater accuracy in controlling the amount of fluid being metered, which can be locked in any desired position without the use of complicated locking means, which has improved means for holding the needle of a metering valve in the proper position and which is simple and inexpensive to manufacture and simple to use.

As many varied modifications of the subject matter of this invention will become apparent to those skilled in the art from the detailed description given hereinabove, it will be understood that the present invention is limited only as provided in the claims appended thereto.

## Claims

1. A metering valve having an inlet and an outlet, a stem-receiving chamber in communication with said inlet, a valve seat extending from said stem-receiving chamber and in communication therewith, a needle receiving chamber interposed between valve seat and said inlet and in communications therewith, a valve stem movably mounted within said stem-receiving chamber, a needle extending from said valve stem and extending within said needle receiving chamber, a tip interposed between said stem and said needle; the valve seat having a lower edge, said lower edge comprising the mouth of the needle-receiving chamber, said tip having a lower end, means for moving the lower end of the tip into contact with said mouth to prevent the flow of fluid, means for moving the lower end away from the mouth to permit flow of fluid from the inlet to the outlet, the contours of said valve seat and the contours of said tip being different whereby there is a space between said valve seat and said tip when said tip is in contact with said mouth.

2. A metering valve as set forth in claim 1 wherein said valve seat is conically shaped and said tip is conically shaped.

3. A metering valve as set forth in Claim 2 wherein the angle of the surface of the conically shaped seat is different from the angle of the surface of the conically shaped valve seat.

4. A metering valves as set for in Claim 3 wherein the lower end of the tip is substantially equal to the lower edge of the valve seat whereby the lower end of the tip will fit into said mouth snugly.

5. A metering valve as set forth in Claim 4 wherein the needle receiving chamber is cylindrical, said needle has a portion which is cylindrical, a portion which is tapered, and a curved end, and said tapered portion is interposed between said cylindrical portion and said curved end.

6. A metering valve as set forth in Claim 5 wherein said stem depends from a handle and wherein said stem is threadably mounted within said stem receiving chamber whereby rotation of the handle will raise and lower the stem.

7. A metering valve as set forth in Claim 6 wherein indicia are provided on the handle and on the bonnet to indicate the position of the needle relative to the needle-receiving chamber.

8. A metering valve as set forth in Claim 7 wherein lock means are provided to hold the stem in a predetermined position.

9. A metering valve comprising an inlet and an outlet in communication with each other, a valve seat interposed between said inlet and said outlet, a stem-receiving chamber in communications with said valve seat, a stem movable relative to said valve-receiving chamber, said stem having a lower tip adapted to a seat on the valve seat in order to seal the inlet and prevent the flow of fluid from the inlet to the outlet, and means for locking the valve stem in a predetermined position, said lock means comprising means for contacting the valve stem to prevent axial movement of the valve stem.

10. A metering valve as set forth in Claim 8 or 9, wherein said lock means comprise an opening in said bonnet communicating with said stem-receiving chamber, wherein a lock plug is mounted in said opening, wherein means are provided to move the lock plug into contact with the stem in order to apply pressure to the stem to lock the stem in position, and wherein means are provided to allow the lock plug to move away from the stem to permit movement of the stem relative to the stem-receiving chamber.

11. A metering valve as set forth in Claim 10 wherein said lock means comprise a lock ring having a portion adapted to apply pressure to said lock plug to cause the lock plug to apply pressure to the stem to lock the stem in position, and wherein said ring has a portion which permits the lock plug to expand and move away from the stem to permit movement of said stem.

12. A metering valve as set forth in Claim 11 wherein said lock plug is an o-ring compressible within said opening.
